# FASCICULE DE BREVET EUROPEEN

(11) **EP 2 580 887 B1**
(45) Date de publication et mention de la délivrance du brevet: **16.01.2019**
(21) Numéro de dépôt: 11723475.7
(22) Date de dépôt: 06.06.2011
(51) Int. Cl.: H04L 12/14, H04L 12/24, H04M 15/00, H04L 29/06, H04L 12/911, H04L 12/917

(54) **GESTION DE CHANGEMENT DE CONDITIONS DE DELIVRANCE D'UN SERVICE**
VERWALTUNG EINER ÄNDERUNG VON DIENSTLIEFERUNGUNGSUMSTÄNDEN
MANAGEMENT OF A CHANGE OF SERVICE DELIVERY CONDITIONS

(30) Priorité: 11.06.2010 FR 1054624
(43) Date de publication de la demande: 17.04.2013
(73) Titulaire: Alcatel Lucent, 91620 Nozay (FR)
(72) Inventeur: LEVY, Thomas, F-91620 Nozay (FR); GARDELLA, Maryse, F-91620 Nozay (FR)
(74) Mandataire: Nokia EPO representatives
(86) Numéro de dépôt international: PCT/EP2011/059297
(87) Numéro de publication internationale: WO 2011/154356

(56) Documents cités:
- WO-A1-2010/049002
- US-A- 6 154 778
- HAKALA L MATTILA ERICSSON J-P KOSKINEN M STURA J LOUGHNEY NOKIA H: "Diameter Credit-Control Application; rfc4006.txt", IETF STANDARD, INTERNET ENGINEERING TASK FORCE, IETF, CH, 1 août 2005 (2005-08-01), XP015041993, ISSN: 0000-0003
- 3GPP: "3rd Generation Partnership Project; Technical Specification Group Services and System Aspects; Telecommunication management; Charging management; Charging architecture and principles (Release 8); 3GPP TS 32.240 Version 8.1.0", 3GPP TECHNICAL SPECIFICATION, SOPHIA ANTIPOLIS, FRANCE , vol. 32.240, no. v8.1.0 1 December 2007 (2007-12-01), pages 1-41, XP002504773, Retrieved from the Internet: URL:http://www.3gpp.org/ftp/Specs/2007-12/ Rel-8/32_series/32240-810.zip [retrieved on 2008-11-20]
- "Digital cellular telecommunications system (Phase 2+); Universal Mobile Telecommunications System (UMTS); LTE; Telecommunication management; Charging management; Diameter charging applications (3GPP TS 32.299 version 8.9.0 Release 8)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V8.9.0, 1 January 2010 (2010-01-01), XP014045780,
- ALCATEL-LUCENT: "Ro enhancement allowing service continuation after OCS denies submitted new service conditions", 3GPP DRAFT; S5-101804-DISCUSSION PAPER RO SERVICE CONTINUATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Bratislava, Slovakia; 20100712, 2 July 2010 (2010-07-02), XP050461037, [retrieved on 2010-07-02]
- ALCATEL-LUCENT: "Ro enhancement allowing service continuation after OCS denies submitted new charging conditions", 3GPP DRAFT; S5-102295 CR R10 32299 SERVICE CONTINUATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. New Delhi, India; 20100823, 13 August 2010 (2010-08-13), XP050461359, [retrieved on 2010-08-13]

## Description

La présente invention concerne la gestion de changement de conditions de délivrance d'un service associé à une communication en cours établie par un terminal d'utilisateur, et plus particulièrement la gestion de changement de conditions de délivrance d'un service engendrant un changement de conditions de taxation pour la délivrance du service.

Le document 3GPP TS32.299 définit une interface Ro pour la tarification en temps réel entre un module CTF ("Charging Trigger Function" en anglais) et un module OCS ("Online Charging System" en anglais). 3GPP: "3rd Generation Partnership Project; Technical Specification Group Services and System Aspects; Telecommunication management; Charging management; Charging architecture and principles (Release 8); 3GPP TS 32.240 Version 8.1.0",3GPP TECHNICAL SPECIFICATION, SOPHIA ANTIPOLIS, FRANCE, vol. 32.240, no. v8.1.0 1 décembre 2007 (2007-12-01), pages 1-41, XP002504773 décrit une architecture de tarification en ligne . WO 2010/049002 A1 (ERICSSON TELEFON AB L M [SE]; CASTRO-CASTRO FABIAN [ES]; LOPEZ-NIETO A) décrit un procédé de négociation de conditions de service entre une entité PCRF et une entité PCEF à travers un système de requête-réponse de nouvelles règles de politique PCC.

Des fonctions de déclenchement de "ré-autorisation" définissent des évènements que le module CTF doit surveiller pendant la délivrance d'un service. Lorsqu'un tel évènement a lieu, par exemple un changement de localisation ou un changement de qualité de service, le module CTF doit déclencher une ré-autorisation au module OCS pour adapter la tarification du service.

Le module OCS supervise la délivrance d'un service au moyen d'une session de type Diameter, pendant laquelle la tarification est effectuée par réservation d'unité. Si, pendant la délivrance d'un service, a lieu un changement qui peut influencer la tarification, le module CTF doit produire un message pour réserver de nouvelles unités avec des conditions actualisées.

Par exemple, un changement peut être une modification du nombre de participants dans une conférence, ou encore une modification d'un type de média dans un appel multimédia, ou encore un changement de qualité de service.

Suite à ce changement, le module OCS peut refuser une réservation de nouvelles unités avec les conditions actualisées pour le compte d'un utilisateur qui demande et paye le service. Par exemple, le service avec les conditions actualisées peut être facturé sur un sous-compte spécifique qui n'a pas de crédit.

Actuellement, le protocole Diameter Ro ne permet pas d'avoir des changements conditionnels lors de la délivrance d'un service. Si le module OCS n'est pas apte à délivrer le service avec les conditions modifiées de tarification, le module OCS transmet une réponse avec un "Result-Code" qui contient un champ renseigné par une paire attribut-valeur AVP ("Attribute Value Pair" en anglais) qui correspond à un échec, cette réponse mettant fin à la session de type Diameter et à la délivrance du service.

Un objectif de l'invention est de remédier aux inconvénients précédents en assurant une continuité de service lorsqu'un changement de conditions de tarification associées au service se produit.

Pour atteindre cet objectif, l'invention concerne un procédé comme celui de la revendication 1 pour la gestion d'un changement de condition d'utilisation d'un service associé à une communication en cours établie par un terminal d'utilisateur dans un réseau de télécommunications.

Avantageusement, l'invention offre une fonctionnalité supplémentaire au réseau de télécommunication permettant d'avoir un changement conditionnel dans les conditions de tarification. En d'autres termes, en cas de modification dans les conditions de délivrance d'un service, si le serveur comprenant un module OCS n'est plus apte à délivrer et facturer le service avec les conditions modifiées, le module OCS permet à l'élément de réseau comprenant un module CTF de continuer la délivrance du service avec d'autres conditions plutôt que de mettre fin au service.

L'invention concerne également un procédé comme celui de la revendication 5 pour la gestion d'un changement de condition d'utilisation d'un service associé à une communication en cours établie par un terminal d'utilisateur dans un réseau de télécommunications.

Selon d'autres caractéristiques de l'invention, le paramètre contenu dans la deuxième requête peut définir un nouveau changement de condition d'utilisation du service différent du changement de condition requis contenu dans la première requête et ne correspondant pas aux anciennes conditions d'utilisation du service avant la transmission de la première requête, ou bien le paramètre contenu dans la deuxième requête peut définir un nouveau changement de condition d'utilisation du service correspondant aux anciennes conditions d'utilisation du service avant la transmission de la première requête.

Selon une autre caractéristique de l'invention, la réponse peut contenir un temps de validité définissant un délai pendant lequel l'élément de réseau peut transmettre une autre requête au serveur et à l'expiration duquel la session se termine si aucune requête n'a été transmise.

L'invention concerne également un serveur comme celui de la revendication 6 pour la gestion d'un changement de condition d'utilisation d'un service associé à une communication en cours établie par un terminal d'utilisateur dans un réseau de télécommunications.

L'invention concerne également un élément de réseau comme celui revendiqué dans la revendication 7 pour la gestion d'un changement de condition d'utilisation d'un service associé à une communication en cours établie par un terminal d'utilisateur dans un réseau de télécommunications, l'élément de réseau étant apte à générer des évènements de tarification en surveillant l'utilisation des ressources du réseau par la communication.

L'invention se rapporte encore à des programmes d'ordinateur, comme ceux revendiqués dans les revendications 8 et 9, et qui sont aptes à être mis en oeuvre respectivement dans un serveur et dans un élément de réseau, lesdits programmes comprenant des instructions qui, lorsque les programmes sont exécutés respectivement dans ledit serveur et dans l'élément de réseau, réalisent les étapes selon les procédés de l'invention. Les revendications dépendantes correspondent à des modes de réalisation préférés.

La présente invention et les avantages qu'elle procure seront mieux compris au vu de la description ci-après faite en référence aux figures annexées, dans lesquelles :
- la figure 1 est un bloc-diagramme schématique d'un système de communication selon une réalisation de l'invention pour gérer des changements de conditions de délivrance d'un service ; et
- la figure 2 est un algorithme d'un procédé pour gérer des changements de conditions de délivrance d'un service selon une réalisation de l'invention.

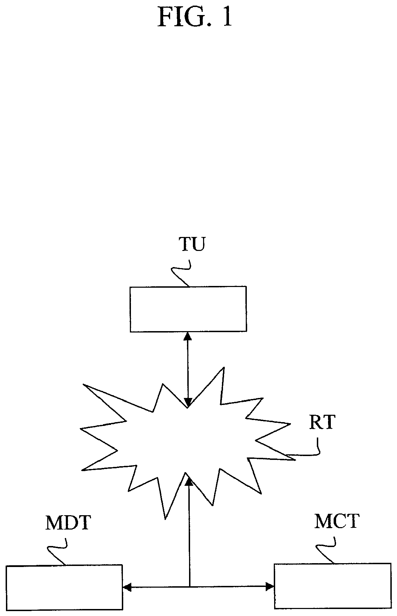

En référence à la figure 1, un système de communication selon l'invention comprend un réseau de télécommunications RT, un terminal d'utilisateur TU, un module de déclenchement de taxation MDT et un module de contrôle de taxation MCT.

Dans la suite de la description, le terme module peut désigner un dispositif, un logiciel ou une combinaison de matériel informatique et de logiciel, configuré pour exécuter au moins une tâche particulière.

Le réseau de télécommunications RT peut être un réseau filaire ou sans fil, ou une combinaison de réseaux filaires et de réseaux sans fil.

Le terminal d'utilisateur TU est apte à établir une communication dans le réseau de télécommunications RT, par exemple avec un autre terminal d'utilisateur. A titre d'exemples, un terminal d'utilisateur TU est un téléphone fixe ou mobile, un dispositif ou objet électronique de télécommunications qui est personnel à l'utilisateur et qui peut être un assistant numérique personnel communicant PDA ("Personnal Digital Assistant" en anglais), ou un téléphone intelligent (SmartPhone), pouvant être relié à une borne d'accès d'un réseau public sans fil de faible portée du type WLAN ("Wireless Local Area Network" en anlais) ou conforme à l'une des normes 802.1x, ou de moyenne portée selon le protocole WIMAX ("World wide Interoperability Microwave Access" en anglais).

Le module de déclenchement de taxation MDT et le module de contrôle de taxation MCT communiquent entre eux à travers le réseau de télécommunications RT du type internet. Dans une variante, le module de déclenchement de taxation MDT et le module de contrôle de taxation MCT communiquent entre eux par un réseau local ou par des lignes spécialisées à travers le réseau RT.

Le module de déclenchement de taxation MDT et le module de contrôle de taxation MCT peuvent être respectivement implémentés dans des serveurs distincts, tels que des serveurs d'application.

Le module de déclenchement de taxation MDT a notamment pour fonctionnalité de s'assurer que le service est délivré grâce à des unités de service autorisées par le module de contrôle de taxation MCT, et déclenche pour cela régulièrement ce dernier.

Le module de contrôle de taxation MCT a notamment pour fonctionnalité de déterminer un nombre d'unités de service autorisé pour la délivrance du service et de transmettre une réponse contenant ce nombre d'unités de service autorisé au module de déclenchement de taxation MDT. A cette fin, le module MCT peut déterminer un tarif associé au service et le compte ou sous-compte à utiliser pour taxer le service, et peut déterminer le nombre d'unités de service autorisé en fonction du tarif et du nombre d'unités de service restantes sur le compte ou le sous-compte.

Par ailleurs, lorsque le module de contrôle de taxation MCT reçoit un nombre d'unités effectivement utilisés pour le service, transmis par le module de déclenchement de taxation MDT, le module MCT décrémente le compte ou le sous-compte correspondant.

Selon une réalisation de l'invention à laquelle il sera fait référence tout au long de la suite de la description, le réseau de télécommunication RT est un réseau de paquets connecté à un réseau IMS ("IP Multimédia Subsystem" en anglais).

Il est considéré que le terminal d'utilisateur est apte à communiquer à travers le réseau de télécommunications RT connecté au réseau IMS, par exemple avec un autre terminal, selon une communication conforme au protocole SIP ("Session Internet Protocol" en anglais). Par exemple, la communication correspond à un échange de flux multimédias relatifs à des contenus audio et/ou des contenus vidéo, ou encore à des messages instantanés. La communication établie par le terminal d'utilisateur peut être aussi une communication avec un serveur de service, tel qu'un serveur web ou un serveur de contenu multimédia.

Le profil de l'utilisateur, contenant les services auxquels ce dernier a souscrit, est mémorisé dans un serveur HSS ("Home Subscriber Server" en anglais) gérant une base de données contenant notamment les identités des utilisateurs, des informations d'enregistrement, des paramètres d'accès et des informations permettant l'invocation de services souscrits par les utilisateurs. Selon une implémentation, le serveur HSS interagit avec d'autres entités du réseau IMS au moyen du protocole Diameter.

Le contrôle d'une communication initiée par le terminal est pris en charge dans le réseau IMS notamment par trois entités de contrôle CSCF ("Call State Control Function" en anglais) : l'entité P-CSCF ("Proxy CSCF" en anglais), I-CSCF ("Interrogating CSCF" en anglais) et S-CSCF ("Serving-CSCF" en anglais).

L'entité P-CSCF est le premier point de contact dans le réseau IMS et son adresse est découverte par le terminal d'utilisateur lors de l'activation d'un contexte PDP ("Packet Data Protocol" en anglais) pour l'échange de messages SIP.

L'entité I-CSCF est en communication avec l'entité P-CSCF et avec le serveur HSS pour assigner l'entité S-CSCF à l'utilisateur en fonction du profil de l'utilisateur mémorisé dans le serveur HSS.

L'entité S-CSCF prend en charge le contrôle de la session de la communication établie par le terminal d'utilisateur et l'invocation de services souscrits par l'utilisateur.

Le module de déclenchement de taxation MDT surveille le contexte de la communication établie par le terminal d'usager, en vérifiant si la valeur d'au moins une donnée parmi un ensemble prédéfini de données de contexte a changé. Ces données de contexte sont fournies par le réseau de télécommunications et sont relatives à la communication. Ces données de contexte correspondent par exemple au débit de la communication, ou à la qualité de service de la communication, ou encore au type de média utilisé dans la communication.

Lorsque le module de déclenchement de taxation MDT détecte l'expiration d'un délai donné, ou un changement de valeur de données de contexte, le module MDT interroge le module de contrôle de taxation MCT pour que ce dernier fournisse au module MDT des informations sur un changement de tarif de la communication. Le module de déclenchement de taxation MDT et le module de contrôle de taxation MCT communiquent entre eux par exemple au moyen du protocole Diameter Ro.

Le module de contrôle de taxation MCT peut être inclus dans un système de tarification en ligne OCS ("Online Charging System" en anglais) qui peut être un serveur situé à différents emplacements dans le réseau IMS.

Le module de déclenchement de taxation MDT peut être inclus dans un élément de réseau, tel qu'un serveur d'application ou une passerelle GGSN ("Gateway GPRS Support Node" en anglais). Par exemple, le module de déclenchement de taxation MDT implémente une fonction CTF ("Charging Trigger Function" en anglais), qui est un point central pour collecter des informations pertinentes relatives à des évènements de tarification dans le réseau et surveiller l'utilisation des ressources du réseau par la communication.

L'élément de réseau, dans lequel est inclus le module de déclenchement de taxation MDT, apte à générer des évènements de tarification en surveillant l'utilisation des ressources du réseau par la communication.

Le module de contrôle de taxation MCT détermine le tarif actuel d'une communication en cours en fonction d'un ensemble de paramètres et de valeurs de ces paramètres associé au tarif. Les paramètres sont relatifs à la communication et peuvent correspondre en partie à des données de contexte fournies par le réseau ou bien être basées sur des ensembles de données de contexte.

Selon un exemple, un paramètre est le type de média utilisé dans la communication et peut avoir pour valeur "vidéo" ou "audio". La valeur de ce paramètre peut être égale à la valeur d'une donnée de contexte correspondant au type de média utilisé dans la communication. Selon un autre exemple, un paramètre est le type de résolution d'une vidéo utilisé dans la communication et peut avoir pour valeur "haute" ou "basse". La valeur de ce paramètre peut être déduite des valeurs de données de contexte correspondant au débit de la communication et à la qualité de service de la communication. Selon encore un autre exemple, un paramètre est le nombre de participants à une conférence audio et peut avoir une valeur comprise entre "3" et "5".

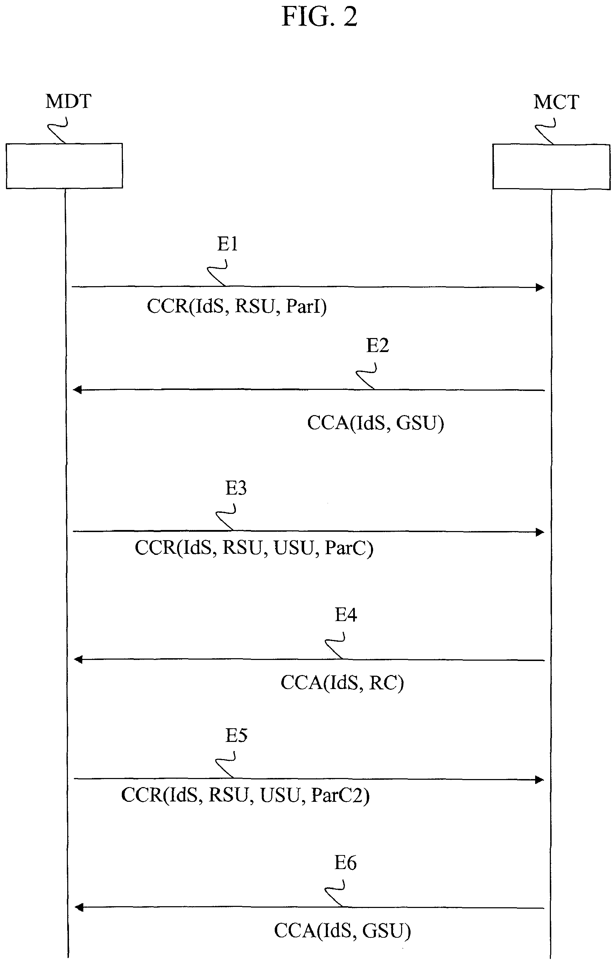

En référence à la figure 2, un procédé pour gérer des changements de conditions de délivrance d'un service selon une réalisation de l'invention comprend des étapes E1 à E6 exécutées dans le système de communication.

Le procédé est décrit ci-après en référence à un réseau de télécommunication RT connecté à un réseau IMS en tant qu'exemple.

A l'étape E1, le terminal TU établit une communication dans le réseau RT, par exemple avec un serveur de média. Le terminal transmet un message d'initiation de session de communication au module de déclenchement de taxation MDT. Ce message est par exemple de type "INVITE" et contient notamment un identificateur du type de communication demandée par l'utilisateur, qui correspond par exemple à une session ou une session vidéo. Le module de déclenchement de taxation MDT identifie le profil de l'utilisateur et le type de service relatif à la communication. Le module MDT transmet une requête CCR ("Credit Control Request" en anglais) au module de contrôle de taxation MCT pour demander une autorisation d'utilisation du service relatif à la communication établie par le terminal TU.

La requête CCR contient notamment un identificateur IdS du service et un nombre d'unités de service requises RSU ("Requested Service Unit" en anglais). Les unités de service peuvent correspondre à des unités monétaires ou téléphoniques. La requête CCR contient en outre au moins un paramètre Parl de communication définissant une condition initiale d'utilisation du service, le paramètre Parl pouvant être un nombre de participants dans une conférence téléphonique par exemple égal à "3", ou une résolution d'une vidéo par exemple égale à "basse".

A l'étape E2, le module de contrôle de taxation MCT détermine le tarif initial de la communication, en fonction d'un ensemble de valeurs de paramètres relatifs à la communication et du type de service au moyen de l'identificateur IdS. Le module de contrôle de taxation MCT vérifie que le service peut être délivré en fonction du compte de l'utilisateur, c'est-à-dire si le compte contient suffisamment d'unités pour autoriser la délivrance du service.

Le module de contrôle de taxation MCT produit une réponse CCA ("Credit Control Answer" en anglais) contenant notamment un nombre d'unités de service délivrées GSU ("Granted Service Unit" en anglais).

Le nombre d'unités de service délivrées GSU correspond à un nombre maximal d'unités qui sont débitées au cours de la communication, et lorsque toutes les unités ont été débitées, le module de déclenchement de taxation MDT doit interroger automatiquement de nouveau le module de contrôle de taxation MCT pour faire une demande de nombre d'unités de service requises RSU.

Le module de contrôle de taxation MCT transmet la réponse CCA au module de déclenchement de taxation MDT.

A l'étape E3, des préférences d'utilisation du service sont modifiées, par exemple par l'utilisateur, par exemple en augmentant le nombre de participants dans une conférence téléphonique, ou en augmentant la résolution d'une vidéo.

Le module de déclenchement de taxation MDT transmet à nouveau une requête CCR au module de contrôle de taxation MCT. La requête CCR contient notamment l'identificateur IdS du service, un autre nombre d'unités de service requises RSU et un nombre d'unités de service utilisées USU ("Used Service Unit" en anglais). Si toutes les unités GSU ont été débitées, le nombre GSU est égal au nombre USU.

La requête CCR contient en outre un paramètre ParC de communication définissant un changement de condition d'utilisation du service, le paramètre pouvant être un nombre de participants dans une conférence téléphonique par exemple égal à "4", ou une résolution d'une vidéo par exemple égale à "haute".

A l'étape E4, le module de contrôle de taxation MCT vérifie si le changement requis de condition d'utilisation du service permet la délivrance du service en fonction des conditions de tarification et du compte de l'utilisateur.

Le module de contrôle de taxation MCT détermine que le compte de l'utilisateur n'autorise pas la délivrance du service avec le changement de conditions d'utilisation d'un service. Le module de contrôle de taxation MCT produit un message avec un code RC ("Result Code" en anglais), par exemple égal à 4020, indiquant que la délivrance du service est autorisée seulement avec d'autres conditions d'utilisation du service, c'est-à-dire que le service ne peut pas être délivré avec le changement de condition, mais peut être délivré avec les anciennes conditions ou éventuellement d'autres conditions.

Le module de contrôle de taxation MCT transmet la réponse CCA au module de déclenchement de taxation MDT contenant le code RC et un temps de validité VT ("Validity Time" en anglais). Le temps de validité VT définit un délai pendant lequel le module de déclenchement de taxation MDT peut demander à nouveau une autorisation d'utilisation du service relatif à la communication établie par le terminal TU et à l'expiration duquel la session se termine si aucune demande n'a été faite.

A l'étape E5, le module de déclenchement de taxation MDT peut décider de refuser les conditions changées d'utilisation du service et de continuer la délivrance du service avec les anciennes conditions, ou éventuellement avec d'autres conditions.

Le module de déclenchement de taxation MDT produit à nouveau une requête CCR.

La requête CCR contient notamment l'identificateur IdS du service et un autre nombre d'unités de service requises RSU. La requête CCR contient en outre un paramètre de communication ParC2 définissant un changement de condition d'utilisation du service, le paramètre pouvant être un nombre de participants dans une conférence téléphonique par exemple de nouveau égal à "3", ou une résolution d'une vidéo par exemple de nouveau égale à "basse", correspondant aux anciennes conditions d'utilisation du service. Les anciennes conditions correspondent donc aux dernières conditions avec lesquelles la délivrance du service était acceptée, c'est-à-dire les conditions d'utilisation du service avant la transmission de la requête CCR de l'étape E1.

Le module de déclenchement de taxation MDT transmet la requête CCR avec RSU.

En variante, la requête CCR contient un paramètre de communication ParC2 définissant un nouveau changement de condition d'utilisation du service différent du changement de condition requis à l'étape E3 et ne correspondant pas aux anciennes conditions d'utilisation du service, le paramètre pouvant être une résolution d'une vidéo par exemple égale à "moyenne".

A l'étape E6, le module de contrôle de taxation MCT détermine le tarif actuel de la communication en fonction des conditions d'utilisation du service et vérifie que le service peut être délivré en fonction du compte de l'utilisateur, c'est-à-dire que le compte contient suffisamment d'unités pour autoriser la délivrance du service.

Le module de contrôle de taxation MCT transmet une réponse CCA au module de déclenchement de taxation MDT, la réponse contenant notamment un nombre d'unités de service délivrées GSU

L'invention décrite ici concerne un procédé, un serveur et un élément de réseau pour gérer des changements de tarif d'une communication. Selon une implémentation de l'invention, les étapes du procédé de l'invention sont déterminées par les instructions de programmes d'ordinateur incorporés dans le serveur et dans l'élément de réseau. Les programmes comportent des instructions de programme, qui lorsque lesdits programmes sont chargés et exécutés respectivement dans le serveur et dans l'élément de réseau, réalisent les étapes du procédé de l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou code intermédiaire entre code source et code objet tel que dans une forme partiellement compilée, ou dans n'importe quelle autre forme souhaitable pour implémenter le procédé selon l'invention. L'étendue de l'invention est définie par les revendications.

## Revendications

1. Procédé pour la gestion d'un changement de condition d'utilisation d'un service associé à une communication en cours établie par un terminal d'utilisateur (TU) dans un réseau de télécommunications (RT), comprenant les étapes suivantes dans un serveur inclus dans le réseau de télécommunications :
recevoir une première requête (CCR) issue d'un élément de réseau apte à générer des évènements de tarification en surveillant l'utilisation des ressources du réseau par la communication, ladite requête comprenant un identificateur (IdS) du service relatif à la communication et un paramètre (ParC) définissant un changement de condition d'utilisation du service,
déterminer (E4) qu'un compte d'utilisateur n'autorise pas la délivrance du service avec le changement de conditions d'utilisation du service et transmettre à l'élément de réseau une réponse (CCA) contenant un code (RC) indiquant que la délivrance du service n'est pas autorisée avec ledit changement de condition d'utilisation du service mais est autorisée avec d'autres conditions d'utilisation du service,
recevoir (E5) une deuxième requête (CCR) depuis l'élément de réseau , la deuxième requête (CCR) contenant un autre paramètre (ParC2) définissant un changement de condition d'utilisation du service différent de celui contenu dans la première requête.

2. Procédé conforme à la revendication 1, selon lequel le paramètre (ParC2) contenu dans la deuxième requête définit un nouveau changement de condition d'utilisation du service correspondant aux anciennes conditions d'utilisation du service avant la transmission de la première requête.

3. Procédé conforme à la revendication 1, selon lequel le paramètre (ParC2) contenu dans la deuxième requête définit un nouveau changement de condition d'utilisation du service différent du changement de condition requis contenu dans la première requête et ne correspondant pas aux anciennes conditions d'utilisation du service avant la transmission de la première requête.

4. Procédé conforme à l'une des revendication 1 à 3, selon lequel la réponse (CCA) contient un temps de validité définissant un délai pendant lequel l'élément de réseau peut transmettre une autre requête au serveur et à l'expiration duquel la session se termine si aucune requête n'a été transmise.

5. Procédé pour la gestion d'un changement de condition d'utilisation d'un service associé à une communication en cours établie par un terminal d'utilisateur (TU) dans un réseau de télécommunications (RT), comprenant les étapes suivantes dans un élément de réseau apte à générer des évènements de tarification en surveillant l'utilisation des ressources du réseau par la communication :
transmettre (E3) une première requête (CCR) à un serveur, ladite requête comprenant un identificateur (IdS) du service relatif à la communication et un paramètre (ParC) définissant un changement de condition d'utilisation du service, de sorte que si le serveur détermine (E3) que le compte de l'utilisateur n'autorise pas la délivrance du service avec le changement de conditions d'utilisation du service, le procédé comprend en outre les étapes suivantes:
recevoir une réponse (CCA) depuis le serveur contenant un code (RC) indiquant que la délivrance du service n'est pas autorisée avec ledit changement de condition d'utilisation du service mais est autorisée avec d'autres conditions d'utilisation du service, et
transmettre (E5) une deuxième requête (CCR) au serveur, la deuxième requête (CCR) contenant un autre paramètre (ParC2) définissant un changement de condition d'utilisation du service différent de celui contenu dans la première requête.

6. Serveur pour la gestion d'un changement de condition d'utilisation d'un service associé à une communication en cours établie par un terminal d'utilisateur (TU) dans un réseau de télécommunications (RT), comprenant :
des moyens (MDT) pour recevoir une première requête (CCR) issue d'un élément de réseau apte à générer des évènements de tarification en surveillant l'utilisation des ressources du réseau par la communication, ladite requête comprenant un identificateur (IdS) du service relatif à la communication et un paramètre (ParC) définissant un changement de condition d'utilisation du service,
des moyens (MDT) pour déterminer que le compte de l'utilisateur n'autorise pas la délivrance du service avec le changement de conditions d'utilisation du service,
des moyens (MDT) pour transmettre à l'élément de réseau une réponse (CCA) contenant un code (RC) indiquant que la délivrance du service n'est pas autorisée avec ledit changement de condition d'utilisation du service mais est autorisée avec d'autres conditions d'utilisation du service,
des moyens (MDT) pour recevoir une deuxième requête (CCR) depuis l'élément de réseau, la deuxième requête (CCR) contenant un autre paramètre (ParC2) définissant un changement de condition d'utilisation du service différent de celui contenu dans la première requête.

7. Elément de réseau pour la gestion d'un changement de condition d'utilisation d'un service associé à une communication en cours établie par un terminal d'utilisateur (TU) dans un réseau de télécommunications (RT), l'élément de réseau étant apte à générer des évènements de tarification en surveillant l'utilisation des ressources du réseau par la communication et comprenant :
des moyens (MCT) pour transmettre une première requête (CCR) à un serveur, ladite requête comprenant un identificateur (IdS) du service relatif à la communication et un paramètre (ParC) définissant un changement de condition d'utilisation du service,
des moyens (MCT) pour recevoir une réponse (CCA) contenant un code (RC) indiquant que la délivrance du service n'est pas autorisée avec ledit changement de condition d'utilisation du service mais est autorisée avec d'autres conditions d'utilisation du service, et
des moyens (MCT) pour transmettre une deuxième requête (CCR) au serveur, la deuxième requête (CCR) contenant un autre paramètre (ParC2) définissant un changement de condition d'utilisation du service différent de celui contenu dans la première requête.

8. Programme d'ordinateur apte à être mis en oeuvre dans un serveur pour la gestion d'un changement de condition d'utilisation d'un service associé à une communication en cours établie par un terminal d'utilisateur (TU) dans un réseau de télécommunications (RT), ledit programme comprenant des instructions qui, lorsque le programme est chargé et exécuté dans ledit serveur, réalisent les étapes suivantes :
recevoir une première requête (CCR) issue d'un élément de réseau apte à générer des évènements de tarification en surveillant l'utilisation des ressources du réseau par la communication, ladite requête comprenant un identificateur (IdS) du service relatif à la communication et un paramètre (ParC) définissant un changement de condition d'utilisation du service,
déterminer (E4) qu'un compte de l'utilisateur n'autorise pas la délivrance du service avec le changement de conditions d'utilisation du service et transmettre à l'élément de réseau une réponse (CCA) contenant un code (RC) indiquant que la délivrance du service n'est pas autorisée avec ledit changement de condition d'utilisation du service mais est autorisée avec d'autres conditions d'utilisation du service,
recevoir (E5) une deuxième requête (CCR) depuis l'élément de réseau, la deuxième requête (CCR) contenant un autre paramètre (ParC2) définissant un changement de condition d'utilisation du service différent de celui contenu dans la première requête.

9. Programme d'ordinateur apte à être mis en oeuvre dans un élément de réseau pour la gestion d'un changement de condition d'utilisation d'un service associé à une communication en cours établie par un terminal d'utilisateur (TU) dans un réseau de télécommunications (RT), l'élément de réseau étant apte à générer des évènements de tarification en surveillant l'utilisation des ressources du réseau par la communication, ledit programme comprenant des instructions qui, lorsque le programme est chargé et exécuté dans ledit élément de réseau, réalisent les étapes suivantes :
transmettre (E3) une première requête (CCR) à un serveur, ladite requête comprenant un identificateur (IdS) du service relatif à la communication et un paramètre (ParC) définissant un changement de condition d'utilisation du service, de sorte que si le serveur détermine (E3) que le compte de l'utilisateur n'autorise pas la délivrance du service avec le changement de conditions d'utilisation du service, les instructions comprises dans ledit programme réalisent en outre les étapes suivantes
recevoir une réponse (CCA) depuis le serveur contenant un code (RC) indiquant que la délivrance du service n'est pas autorisée avec ledit changement de condition d'utilisation du service mais est autorisée avec d'autres conditions d'utilisation du service, et
transmettre (E5) une deuxième requête (CCR) au serveur, la deuxième requête (CCR) contenant un autre paramètre (ParC2) définissant un changement de condition d'utilisation du service différent de celui contenu dans la première requête.

## Patentansprüche

1. Verfahren zur Verwaltung einer Änderung einer Nutzungsbedingung eines Dienstes, der zu einer laufenden Kommunikation gehört, die von einem Benutzerendgerät (TU) in einem Telekommunikationsnetz (RT) hergestellt ist, umfassend die folgenden Schritte in einem Server, der in dem Telekommunikationsnetz enthalten ist:
Empfangen einer ersten Anforderung (CCR), die von einem Netzelement kommt, das geeignet ist, durch Überwachen der Nutzung der Ressourcen des Netzes durch die Kommunikation Tarifierungsereignisse zu erzeugen, die Anforderung umfassend eine Kennung (IdS) des Dienstes bezogen auf die Kommunikation und einen Parameter (ParC), der eine Änderung einer Nutzungsbedingung des Dienstes definiert,
Bestimmen (E4), dass ein Benutzerkonto die Erbringung des Dienstes mit der Änderung von Nutzungsbedingungen des Dienstes nicht erlaubt, und Übertragen einer Antwort (CCA), die einen Code (RC) enthält, der angibt, dass die Erbringung des Dienstes mit der Änderung einer Nutzungsbedingung des Dienstes nicht erlaubt ist, aber mit anderen Nutzungsbedingungen des Dienstes erlaubt ist, an das Netzelement,
Empfangen (E5) einer zweiten Anforderung (CCR) von dem Netzelement, wobei die zweite Anforderung (CCR) einen anderen Parameter (ParC2) enthält, der eine Änderung einer Nutzungsbedingung des Dienstes definiert, der sich von dem unterscheidet, der in der ersten Anforderung enthalten ist.

2. Verfahren nach Anspruch 1, wobei der Parameter (ParC2), der in der zweiten Anforderung enthalten ist, eine neue Änderung einer Nutzungsbedingung des Dienstes definiert, die den alten Nutzungsbedingungen des Dienstes vor der Übertragung der ersten Anforderung entspricht.

3. Verfahren nach Anspruch 1, wobei der Parameter (ParC2), der in der zweiten Anforderung enthalten ist, eine neue Änderung einer Nutzungsbedingung des Dienstes definiert, die sich von der Änderung einer Nutzungsbedingung, die in der ersten Anforderung angefordert wird, unterscheidet, und den alten Nutzungsbedingungen des Dienstes vor der Übertragung der ersten Anforderung nicht entspricht.

4. Verfahren nach einem der Ansprüche 1 bis 3, wobei die Antwort (CCA) eine Gültigkeitszeit enthält, die einen Zeitraum definiert, während welchem das Netzelement eine andere Anforderung an den Server übertragen kann, und bei wessen Ablauf die Sitzung endet, wenn keine Anforderung übertragen wurde.

5. Verfahren zur Verwaltung einer Änderung einer Nutzungsbedingung eines Dienstes, der zu einer laufenden Kommunikation gehört, die von einem Benutzerendgerät (TU) in einem Telekommunikationsnetz (RT) hergestellt ist, umfassend die folgenden Schritte in einem Netzelement, das geeignet ist, durch Überwachen der Nutzung der Ressourcen des Netzes durch die Kommunikation Tarifierungsereignisse zu erzeugen:
Übertragen (E3) einer ersten Anforderung (CCR) an einen Server, die Anforderung umfassend eine Kennung (IdS) des Dienstes bezogen auf die Kommunikation und einen Parameter (ParC), der eine Änderung einer Nutzungsbedingung des Dienstes definiert, so dass, wenn der Server bestimmt (E3), dass das Konto des Benutzers die Erbringung des Dienstes mit der Änderung von Nutzungsbedingungen des Dienstes nicht erlaubt, das Verfahren ferner die folgenden Schritte umfasst:
Empfangen einer Antwort (CCA) von dem Server, die einen Code (RC) enthält, der angibt, dass die Erbringung des Dienstes mit der Änderung einer Nutzungsbedingung des Dienstes nicht erlaubt ist, aber mit anderen Nutzungsbedingungen des Dienstes erlaubt ist, und
Übertragen (E5) einer zweiten Anforderung (CCR) an den Server, wobei die zweite Anforderung (CCR) einen anderen Parameter (ParC2) enthält, der eine Änderung einer Nutzungsbedingung des Dienstes definiert, der sich von dem unterscheidet, der in der ersten Anforderung enthalten ist.

6. Server für die Verwaltung einer Änderung einer Nutzungsbedingung eines Dienstes, der zu einer laufenden Kommunikation gehört, die von einem Benutzerendgerät (TU) in einem Telekommunikationsnetz (RT) hergestellt ist, umfassend:
Mittel (MDT) zum Empfangen einer ersten Anforderung (CCR), die von einem Netzelement kommt, das geeignet ist, durch Überwachen der Nutzung der Ressourcen des Netzes durch die Kommunikation Tarifierungsereignisse zu erzeugen, die Anforderung umfassend eine Kennung (IdS) des Dienstes bezogen auf die Kommunikation und einen Parameter (ParC), der eine Änderung einer Nutzungsbedingung des Dienstes definiert,
Mittel (MDT) zum Bestimmen, dass das Konto des Benutzers die Erbringung des Dienstes mit der Änderung von Nutzungsbedingungen des Dienstes nicht erlaubt,
Mittel (MDT) zum Übertragen einer Antwort (CCA) an das Netzelement, die einen Code (RC) enthält, der angibt, dass die Erbringung des Dienstes mit der Änderung einer Nutzungsbedingung des Dienstes nicht erlaubt ist, aber mit anderen Nutzungsbedingungen des Dienstes erlaubt ist,
Mittel (MDT) zum Empfangen einer zweiten Anforderung (CCR) von dem Netzelement, wobei die zweite Anforderung (CCR) einen anderen Parameter (ParC2) enthält, der eine Änderung einer Nutzungsbedingung des Dienstes definiert, der sich von dem unterscheidet, der in der ersten Anforderung enthalten ist.

7. Netzelement zur Verwaltung einer Änderung einer Nutzungsbedingung eines Dienstes, der zu einer laufenden Kommunikation gehört, die von einem Benutzerendgerät (TU) in einem Telekommunikationsnetz (RT) hergestellt ist, wobei das Netzelement geeignet ist, durch Überwachen der Nutzung der Ressourcen des Netzes durch die Kommunikation Tarifierungsereignisse zu erzeugen, und Folgendes umfasst:
Mittel (MCT) zum Übertragen einer ersten Anforderung (CCR) an einen Server, die Anforderung umfassend eine Kennung (IdS) des Dienstes bezogen auf die Kommunikation und einen Parameter (ParC), der eine Änderung einer Nutzungsbedingung des Dienstes definiert,
Mittel (MCT) zum Empfangen einer Antwort (CCA), die einen Code (RC) enthält, der angibt, dass die Erbringung des Dienstes mit der Änderung einer Nutzungsbedingung des Dienstes nicht erlaubt ist, aber mit anderen Nutzungsbedingungen des Dienstes erlaubt ist, und
Mittel (MCT) zum Übertragen einer zweiten Anforderung (CCR) an den Server, wobei die zweite Anforderung (CCR) einen anderen Parameter (ParC2) enthält, der eine Änderung einer Nutzungsbedingung des Dienstes definiert, der sich von dem unterscheidet, der in der ersten Anforderung enthalten ist.

8. Computerprogramm, das geeignet ist, in einem Server zur Verwaltung einer Änderung einer Nutzungsbedingung eines Dienstes ausgeführt zu werden, der zu einer laufenden Kommunikation gehört, die von einem Benutzerendgerät (TU) in einem Telekommunikationsnetz (RT) hergestellt ist, das Programm umfassend Anweisungen, die die folgenden Schritte ausführen, wenn das Programm in den Server geladen und darin ausgeführt wird:
Empfangen einer ersten Anforderung (CCR), die von einem Netzelement kommt, das geeignet ist, durch Überwachen der Nutzung der Ressourcen des Netzes durch die Kommunikation Tarifierungsereignisse zu erzeugen, die Anforderung umfassend eine Kennung (IdS) des Dienstes bezogen auf die Kommunikation und einen Parameter (ParC), der eine Änderung einer Nutzungsbedingung des Dienstes definiert,
Bestimmen (E4), dass ein Konto des Benutzers die Erbringung des Dienstes mit der Änderung von Nutzungsbedingungen des Dienstes nicht erlaubt, und Übertragen einer Antwort (CCA), die einen Code (RC) enthält, der angibt, dass die Erbringung des Dienstes mit der Änderung einer Nutzungsbedingung des Dienstes nicht erlaubt ist, aber mit anderen Nutzungsbedingungen des Dienstes erlaubt ist, an das Netzelement,
Empfangen (E5) einer zweiten Anforderung (CCR) von dem Netzelement, wobei die zweite Anforderung (CCR) einen anderen Parameter (ParC2) enthält, der eine Änderung einer Nutzungsbedingung des Dienstes definiert, der sich von dem unterscheidet, der in der ersten Anforderung enthalten ist.

9. Computerprogramm, das geeignet ist, in einem Netzelement zur Verwaltung einer Änderung einer Nutzungsbedingung eines Dienstes ausgeführt zu werden, der zu einer laufenden Kommunikation gehört, die von einem Benutzerendgerät (TU) in einem Telekommunikationsnetz (RT) hergestellt ist, wobei das Netzelement geeignet ist, durch Überwachen der Nutzung der Ressourcen des Netzes durch die Kommunikation Tarifierungsereignisse zu erzeugen, das Programm umfassend Anweisungen, die die folgenden Schritte ausführen, wenn das Programm in das Netzelement geladen und darin ausgeführt wird:
Übertragen (E3) einer ersten Anforderung (CCR) an einen Server, die Anforderung umfassend eine Kennung (IdS) des Dienstes bezogen auf die Kommunikation und einen Parameter (ParC), der eine Änderung einer Nutzungsbedingung des Dienstes definiert, so dass, wenn der Server bestimmt (E3), dass das Konto des Benutzers die Erbringung des Dienstes mit der Änderung von Nutzungsbedingungen des Dienstes nicht erlaubt, die Anweisungen, die in dem Programm enthalten sind, ferner die folgenden Schritte ausführen:
Empfangen einer Antwort (CCA) von dem Server, die einen Code (RC) enthält, der angibt, dass die Erbringung des Dienstes mit der Änderung einer Nutzungsbedingung des Dienstes nicht erlaubt ist, aber mit anderen Nutzungsbedingungen des Dienstes erlaubt ist, und
Übertragen (E5) einer zweiten Anforderung (CCR) an den Server, wobei die zweite Anforderung (CCR) einen anderen Parameter (ParC2) enthält, der eine Änderung einer Nutzungsbedingung des Dienstes definiert, der sich von dem unterscheidet, der in der ersten Anforderung enthalten ist.

## Claims

1. Method for managing a change of conditions of use of a service associated with a current call established by a user terminal (TU) in a telecommunications network (RT), comprising the following steps in a server included in the telecommunications network:
receiving a first request (CCR) sent from a network element capable of generating charging events by monitoring the use of the network resources by the call, said request comprising an identifier (IdS) of the service relating to the call and a parameter (ParC) defining a change of conditions of use of the service,
determining (E4) that a user account does not authorize the delivery of the service with the change of conditions of use of the service, and transmitting to the network element a response (CCA) containing a code (RC) indicating that the delivery of the service is not authorized with said change of conditions of use of the service, but is authorized with other conditions of use of the service,
receiving (E5) a second request (CCR) from the network element, the second request (CCR) containing another parameter (ParC2) defining a change of conditions of use of the service different from that contained in the first request.

2. Method according to Claim 1, according to which the parameter (ParC2) contained in the second request defines a new change of conditions of use of the service corresponding to the former conditions of use of the service before the transmission of the first request.

3. Method according to Claim 1, according to which the parameter (ParC2) contained in the second request defines a new change of conditions of use of the service different from the requested change of conditions contained in the first request, and not corresponding to the former conditions of use of the service before the transmission of the first request.

4. Method according to any of Claims 1 to 3, according to which the response (CCA) contains a validity time defining a time interval during which the network element may transmit another request to the server, and on the expiry of which the session terminates if no request has been transmitted.

5. Method for managing a change of conditions of use of a service associated with a current call established by a user terminal (TU) in a telecommunications network (RT), comprising the following steps in a network element capable of generating charging events by monitoring the use of the network resources by the call:
transmitting (E3) a first request (CCR) to a server, said request comprising an identifier (IdS) of the service relating to the call and a parameter (ParC) defining a change of conditions of use of the service, such that, if the server determines (E3) that the user's account does not authorize the delivery of the service with the change of conditions of use of the service, the method further comprises the following steps:
receiving a response (CCA) from the server, containing a code (RC) indicating that the delivery of the service is not authorized with said change of conditions of use of the service, but is authorized with other conditions of use of the service, and
transmitting (E5) a second request (CCR) to the server, the second request (CCR) containing another parameter (ParC2) defining a change of conditions of use of the service different from that contained in the first request.

6. Server for managing a change of conditions of use of a service associated with a current call established by a user terminal (TU) in a telecommunications network (RT), comprising:
means (MDT) for receiving a first request (CCR) sent from a network element capable of generating charging events by monitoring the use of the network resources by the call, said request comprising an identifier (IdS) of the service relating to the call and a parameter (ParC) defining a change of conditions of use of the service,
means (MDT) for determining that the user's account does not authorize the delivery of the service with the change of conditions of use of the service,
means (MDT) for transmitting to the network element a response (CCA) containing a code (RC) indicating that the delivery of the service is not authorized with said change of conditions of use of the service, but is authorized with other conditions of use of the service,
means (MDT) for receiving a second request (CCR) from the network element, the second request (CCR) containing another parameter (ParC2) defining a change of conditions of use of the service different from that contained in the first request.

7. Network element for managing a change of conditions of use of a service associated with a current call established by a user terminal (TU) in a telecommunications network (RT), the network element being capable of generating charging events by monitoring the use of the network resources by the call, and comprising:
means (MCT) for transmitting a first request (CCR) to a server, said request comprising an identifier (IdS) of the service relating to the call and a parameter (ParC) defining a change of conditions of use of the service,
means (MCT) for receiving a response (CCA) containing a code (RC) indicating that the delivery of the service is not authorized with said change of conditions of use of the service, but is authorized with other conditions of use of the service,
means (MCT) for transmitting a second request (CCR) to the server, the second request (CCR) containing another parameter (ParC2) defining a change of conditions of use of the service different from that contained in the first request.

8. Computer programme suitable for use in a server for managing a change of conditions of use of a service associated with a current call established by a user terminal (TU) in a telecommunications network (RT), said programme comprising instructions which, when the programme is loaded and run on said server, execute the following steps:
receiving a first request (CCR) sent from a network element capable of generating charging events by monitoring the use of the network resources by the call, said request comprising an identifier (IdS) of the service relating to the call and a parameter (ParC) defining a change of conditions of use of the service,
determining (E4) that an account of the user does not authorize the delivery of the service with the change of conditions of use of the service, and transmitting to the network element a response (CCA) containing a code (RC) indicating that the delivery of the service is not authorized with said change of conditions of use of the service, but is authorized with other conditions of use of the service,
receiving (E5) a second request (CCR) from the network element, the second request (CCR) containing another parameter (ParC2) defining a change of conditions of use of the service different from that contained in the first request.

9. Computer programme suitable for use in a network element for managing a change of conditions of use of a service associated with a current call established by a user terminal (TU) in a telecommunications network (RT), the network element being capable of generating charging events by monitoring the use of the network resources by the call, said programme comprising instructions which, when the programme is loaded and run on said network element, execute the following steps:
transmitting (E3) a first request (CCR) to a server, said request comprising an identifier (IdS) of the service relating to the call and a parameter (ParC) defining a change of conditions of use of the service, such that, if the server determines (E3) that the user's account does not authorize the delivery of the service with the change of conditions of use of the service, the instructions included in said programme also execute the following steps:
receiving a response (CCA) from the server containing a code (RC) indicating that the delivery of the service is not authorized with said change of conditions of use of the service, but is authorized with other conditions of use of the service, and
transmitting (E5) a second request (CCR) to the server, the second request (CCR) containing another parameter (ParC2) defining a change of conditions of use of the service different from that contained in the first request.
